Europäisches Patentamt

European Patent Office

Office européen des brevets

(19)

(11) Publication number: 0 222 966

A1

## EUROPEAN PATENT APPLICATION

(12)

(21) Application number: 85830290.4

(22) Date of filing: 22.11.85

(51) Int. Cl.⁴: A01G 25/02

(43) Date of publication of application:
27.05.87 Bulletin 87/22

(84) Designated Contracting States:
AT BE CH DE FR GB LI LU NL SE

(71) Applicant: TRIS STAMPI S.p.A.
Via Peschiera, 7/a
I-62010 Montelupone (AP)(IT)

(72) Inventor: Principi, Mario
Recanati (MC) Via Vallememoria 77
Tris Stampi - S.p.A.(IT)

(74) Representative: Baldi, Claudio
Piazza Ghislieri, 3
I-60035 Jesi (Ancona)(IT)

(54) Drip for irrigation of constant flow, irrespective of the water pressure at the point of withdrawal from the water supply.

(57) This invention concerns a drip for irrigation of constant flow, due to the fact that the hole from where the water drips, is to be found at the bottom of an atmospheric pressure tank (1), where the water level is kept constant by a needle valve consisting of a float (3) bearing a needle (3A) at the top, whose purpose is to close the water hole blocking the flow of water under pressure coming from the water supply.

The rate of discharge therefore from the drip, according to the invention, results constant, on account of the water head, in turn maintained constant, under which the discharge hole lies (4A).

FIG. 1

EP 0 222 966 A1

## Drip for irrigation of constant flow, irrespective of the water pressure at the point of withdrawal from the water supply.

This patent application for an industrial model concerns a drip for irrigation, of constant flow, due to the fact that the hole from where the water drips is to be found at the bottom of an atmospheric pressure tank, where the water level is kept constant by a needle valve consisting of a float bearing a needle at the top, whose purpose is to close the water hole, blocking the water flow under pressure coming from the water supply.

The rate of discharge, therefore, from the drip results constant, on account of the water head being maintained constant, under which the discharge hole lies.

The model in question therefore guarantees a continual dripping at a constant rate, irrespective of the water pressure at the point of withdrawal from the water supply; it is also possible to vary, ad lib, the same flow by simply adjusting the drip hole.

According to the invention, this drip corrects the drawback encountered in most of the drips for irrigation produced at the moment, where flow varies according to the position along the water supply, as their flow depends on the pressure of the water supply, a pressure which, as we know, decreases gradually but continuously in and along the water pipes following the direction of the water flow.

The obvious need to irrigate evenly plants of the same cultivation, as for example in orchards, has encouraged several manufactur to design drips for irrigation of constant flow, but in comparison, this model, according to the invention, stands out for its extreme structural simplicity, its high reliability and low costs of production.

As already mentioned in the introduction, the model in question, consists of an atmospheric pressure tank, at a constant level, in which a float whith needle valve guarantees a constant water level.

At the water outlet, positioned on the bottom of the tank, an interchangeable cap-shaped nozzle with a guaged drip hole is applied.

For greater clarity, the description of the invention proceeds with reference to the attached drawings, shown merely for illustration purposes, and not restrictive, in which:

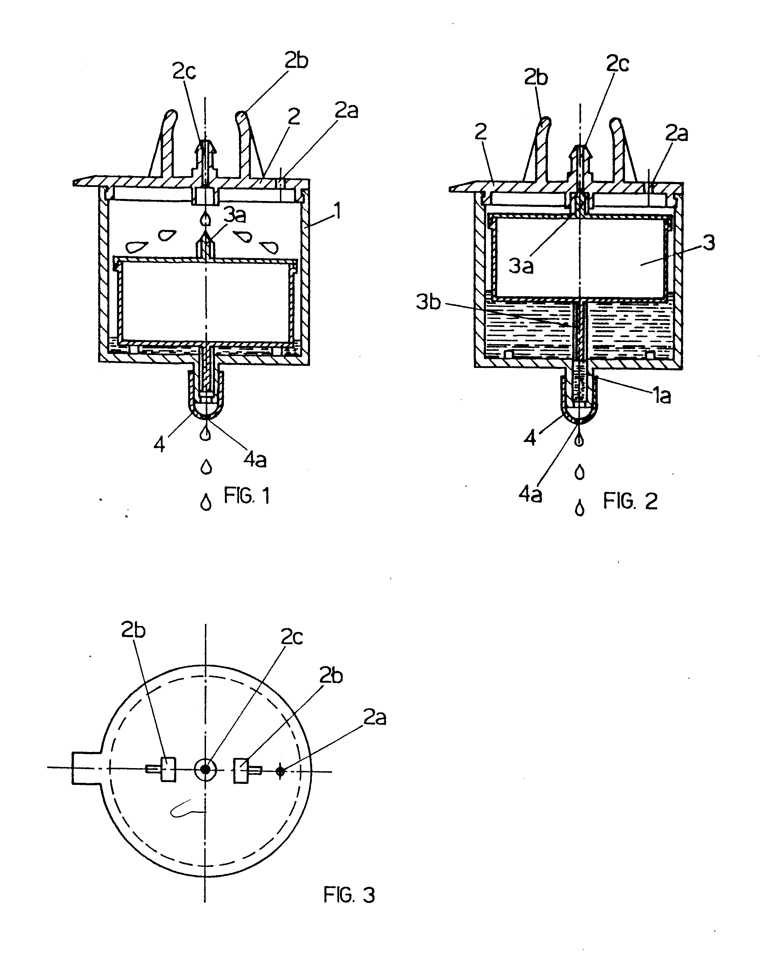

-fig. 1 is a diametrical section of the drip according to the invention, not in function, that is, with the tank empty, float lying at the bottom of the tank and the water hole open;

-fig. 2 is a diametrical section of the drip, according to the invention, in operation, that is, with the tank full of water, float lifted from the bottom and water hole closed;

-fig. 3 is a view from the top of the drip according to the invention.

With reference to the above-mentioned drawings, the model, according to the invention, made preferably of plastic, consists of a cylindrical tank - (1), closed at the top by a circular pressure lid (2), where a small hole is provided (2a), for the purpose of having a constant pressure inside the tank equal to the atmospheric pressure.

To fix the drip along the water supply, the top of the lid (2), is provided with two uprights (2b), in a symmetrical and opposing position, slightly bent towards the centre, intended to clasp together, from opposite sides, around the tube, after having been opened out elastically.

From the centre of the lid (2), at the top, juts the needle-shaped inlet (2c), to be inserted into one of the derivation openings provided for along the water supply.

The tank (1), houses a cylindrical box-shaped body (3), acting as a float, from the lid of which, a needle (3a), juts out at the top, fitted, to hermetically seal from the inside the needle-shaped inlet - (2c), through which the water feed reaches the tank (1).

The vertical movement of the float (3), is constantly guided by a rod with longitudinal grooves, projecting below and in the centre of the float (3), and sliding exactly into the water outlet (1a), provided for in the centre and at the bottom of the tank (1).

On the outside of said outlet (1a), an interchangeable cap-shaped nozzle with a guaged drip hole (4a), can be applied.

## Claims

1) Drip for irrigation of constant flow, irrespective of the water pressure at the point of withdrawal along the water supply, characterized by the fact that it consists of an atmospheric pressure cylindrical tank, closed at the top by a circular lid, inside which a cylindrical float is housed, and from which, a needle juts out at the centre, which hermetically seals from the inside the inlet provided for at the centre and on the outside of the aforesaid lid, through which the water feed reaches the tank. Vertical movement of the float is constantly guided by a rod with longitudinal grooves, projecting underneath and from the centre of the float, and sliding exactly into the drip outlet found at the centre and at the bottom of the tank.

2) Drip for irrigation of constant flow, irrespective of the water pressure at the point of withdrawal along the water supply, according to the previous claim, characterized by the fact that on the outside of the drip outlet provided for underneath and in the centre of the bottom of the tank, an interchangeable cap-shaped nozzle with a guaged drip hole can be applied.

3) Drip for irrigation of constant flow, irrespective of the water pressure at the point of withdrawal along the water supply, according to claim 1), characterized by the fact that, to fix the drip along the water supply, the top of the tank lid is provided with two uprights in a symmetrical and opposing position, slightly bent towards the centre, intended to clasp together from opposite sides around the tube, after having been opened out elastically.

FIG. 1

FIG. 2

FIG. 3

**Dr. Ing. CLAUDIO BALDI**
Iscritto ALBO
MANDATARI ABILITATI

TAV. I-1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 125 665 (MOSS) * Page 1, line 82 - page 2, line 108; figures 1-5 * | 1 | A 01 G 25/02 |
| A | US-A-3 989 043 (DIMEFF) * Column 3, line 35 - column 5, line 52; figure 1 * | 1 | |
| A | GB-A-2 157 805 (MINNESOTA RUBBER CO.) * Page 1, line 111 - page 2, line 108; figures 1-5 * | 1 | |
| A | US-A-3 806 031 (OLSON) * Column 4, lines 22-34; figure 1 * | 3 | |

TECHNICAL FIELDS SEARCHED (Int. Cl.4)

A 01 G
A 61 M

The present search report has been drawn up for all claims

| Place of search | Date of completion of the search | Examiner |
|---|---|---|
| THE HAGUE | 25-02-1987 | HERYGERS J.J. |